Europäisches Patentamt

European Patent Office

Office européen des brevets

(11) Veröffentlichungsnummer: **0 299 144**

**A2**

(12) **EUROPÄISCHE PATENTANMELDUNG**

(21) Anmeldenummer: **88105445.6**

(22) Anmeldetag: **06.04.88**

(51) Int. Cl.⁴: **A47J 31/057 , A47J 31/52 , A47J 31/56**

(30) Priorität: **11.07.87 DE 3723017**

(43) Veröffentlichungstag der Anmeldung:
**18.01.89 Patentblatt 89/03**

(84) Benannte Vertragsstaaten:
**CH FR GB IT LI NL SE**

(71) Anmelder: **ROBERT KRUPS STIFTUNG & CO. KG.**
**Heresbachstrasse 29**
**D-5650 Solingen 19(DE)**

(72) Erfinder: **Hoffmann, Erich**
**Katterbachstrasse 38**
**D-5060 Bergisch-Gladbach 2(DE)**

(74) Vertreter: **Buse, Karl Georg, Dipl.-Phys. et al**
**Patentanwälte Dipl.-Phys. Buse Dipl.-Phys.**
**Mentzel Dipl.-Ing. Ludewig Unterdörnen 114**
**D-5600 Wuppertal 2(DE)**

(54) **Elektrisch betriebenes Gerät zum Zubereiten von Heissgetränken, wie Kaffee, Tee od.dgl.**

(57) Es handelt sich um ein elektrisch betriebenes Gerät zum Zubereiten von Heißgetränken, wie Kaffee od.dgl., in dessen Gehäuse ein druckdichter Frischwasserbehälter untergebracht ist. Der Frischwasserbehälter hat im Bereich seines Bodens eine mit einem Schalter zusammenwirkende elektrische Heizung und in seinem Inneren ein Steigrohr. Der Auslauf des Steigrohres liegt über einem das Kaffeemehl in einer Filtertüte aufnehmenden Filterbehälter. Unterhalb dieses Filterbehälters ist ein Auffangbehälter in Form eines Glaskruges od.dgl. für den fertig zubereiteten Kaffee angeordnet. Der Auffangbehälter steht dabei auf einer Warmhalteplatte des Gehäusefußes des Gerätes. Die elektrische Heizung des Frischwasserbehälters besteht aus Dickschichtleiterbahnen, die unter Benutzung pastenförmiger Werkstoffe auf einem elektrisch isolierenden Träger aufgebracht sind. Der Dickschichtheizer steht einerends mit einem Schalter (Ein- und Ausschalter) und andernends mit wenigstens einem Zeitrelais in Wirkverbindung, welches über eine Steuerleitung mit einem Temperaturfühler am Steigrohr in Verbindung steht. Bevorzugt wird die Benutzung eines selbstregelnden Heizelementes mit positivem Temperaturkoeffizienten (PTC) und einer Impuls-Pause-Steuerung. Verwendet werden dabei zweckmäßig zwei abwechselnd arbeitende Zeitrelais, von denen das eine die Impulse und das andere die Pausen beim Betrieb des Dickschichtheizers steuert.

FIG. 6

## Elektrisch betriebenes Gerät zum Zubereiten von Heißgetränken, wie Kaffee od.dgl.

Die Erfindung bezieht sich auf ein elektrisch betriebenes Gerät zum Zubereiten von Heißgetränken, wie Kaffee od.dgl., in dessen Gehäuse ein druckdichter Frischwasserbehälter untergebracht ist, der im Bereich seines Bodens eine mit einem Schalter zusammenwirkende elektrische Heizung und in seinem Inneren ein Steigrohr aufweist, dessen Auslauf über einem das Kaffeemehl aufnehmenden Filterbehälter liegt und wobei unterhalb des Filterbehälters ein Auffangbehälter für den fertig zubereiteten Kaffee angeordnet ist, der auf einer Warmhalteplatte des Gehäusefußes abstellbar ist.

Durch die DE-OS 2 428 165 ist ein Haushaltgerät dieser Art bekanntgeworden. Dabei ist der Aufnahmebehälter für Frischwasser druckfest ausgebildet und hat im Bereich seines Bodens eine elektrische Heizeinrichtung, die im Wasser selbst liegt. Oberhalb des Frischwasserbehälters befindet sich ein aromadicht verschließbares Brühgefäß, das einen ersten Aufnahmeraum für das Brühwasser und einen zweiten Aufnahmeraum für das Kaffeepulver aufweist. Am Boden des ersten Aufnahmeraumes ist eine Sperrvorrichtung in Form eines Magnetventils angebracht, die das fertige Getränk zunächst am Abfluß hindert. Der Aufnahmebehälter für das Frischwasser und der Ziehbehälter bzw. die Brühvorrichtung sind durch ein Steigrohr miteinander verbunden. Die eine Öffnung dieses Steigrohres liegt im Bereich des Bodens des Frischwasserbehälters und damit im Bereich der dort angeordneten elektrischen Heizung. Das Steigrohr durchdringt den Boden des Ziehbehälters, der bereichsweise zugleich den Deckel für den Frischwasserbehälter bildet. Das obere Ende des Steigrohres ist im Ziehbehälter angeordnet und zwar in Nähe dea abnehmbaren Deckels desselben. Beim bestimmungsgemäßen Gebrauch dieses bekannten haushaltgerätes wird mittels der elektrischen Heizeinrichtung das Frischwasser in dem Aufnahmebehälter zum Kochen gebracht. Das kochende Wasser wird durch Eigendruck aus dem Frischwasserbehälter durch das Steigrohr in den oberhalb des Frischwasserbehälters liegenden Ziehbehälter gefördert und kommt mit dem dort vorhandenen Kaffeemehl in Wirkverbindung. Das Einwirken des heißen Wassers auf das Kaffeemehl erfolgt so lange, wie es der Benutzer wünscht. Zu diesem Zweck ist eine Zeitschaltuhr vorgesehen. Nach Ablauf der eingestellten Zeit wird ein Magnetventil im Boden des Ziehbehälters geöffnet. Dadurch kann das fertig zubereitete Getränk in eine darunter befindliche Aufnahmekanne od.dgl. abfließen. Bei dieser bekannten Ausführungsform eines elektrisch betriebenen Haushaltgerätes ist ein sehr lang bemessenes Steigrohr erforderlich, das vom Boden des Frischwasserbehälters bis in die Nähe des Deckels des Ziehbehälters reicht. Das Steigrohr ist ortsfest im Deckel des Frischwasserbehälters bzw. im Boden des Ziehbehälters angeordnet. Eine Verschiebung desselben oder eine Längenänderung ist nicht möglich. Nachteilig bei dieser bekannten Ausführungsform eines Haushaltgerätes zum Zubereiten von Heißgetränken, wie Kaffee, ist es, daß eine normale elektrische Widerstandsheizung benutzt wird, die darüber hinaus noch im Inneren des Frischwasserbehälters angeordnet ist. Daher sind besondere Vorkehrungen zu treffen, um die im Frischwasserbehälter angeordneten elektrischen Einrichtungen vor dem Einfluß des Wassers zu schützen. Hinzu kommt, daß diese bekannte Ausführungsform des Haushaltgerätes nur kontinuierlich arbeiten kann. Mit ihr kann somit kein schwallweises Zuführen des erhitzten Wassers zu dem Kaffeemehl erfolgen. Dies liegt an der Trägheit der kompakten elektrischen Widerstandsheizung.

Bei vielen der bisher bekannten Ausführungsformen von elektrisch betriebenen Haushaltgeräten zum Zubereiten von Kaffee ist es erforderlich, zum Schalten bzw. Steuern einen Thermostat, eine Diode und eine Schmelzsicherung einzusetzen. Durch diese zusätzlichen Einrichtungen eines elektrisch betriebenen Haushaltgerätes verteuert sich die Herstellung desselben, abgesehen davon, daß sich hierdurch zusätzliche Störquellen beim Betrieb des Haushaltgerätes ergeben.

Der Erfindung liegt die Aufgabe zugrunde, ein elektrisch betriebenes Haushaltgerät der eingangs näher gekennzeichneten Art zu schaffen, welches besonders einfach im Aufbau ist und daher wirtschaftlich hergestellt werden kann. Dabei soll die beim diesem Haushaltgerät eingesetzte Heizung eine geringe Wärmekapazität aufweisen, und schließlich soll das Haushaltgerät unverzüglich auf die jeweils in den Frischwasserbehälter eingebrachte Wassermenge reagieren, d.h. es soll eine automatische Anpassung der eingesetzten Heizung an die jeweils vorhandene Wassermenge erfolgen.

Zur Lösung dieser Aufgabe wird erfindungsgemäß vorgeschlagen, die elektrische Heizung des Frischwasserbehälters aus Dickschichtleiterbahnen bestehen zu lassen, die unter Benutzung pastenförmiger Werkstoffe auf einen elektrisch isolierenden Träger aufgebracht sind, wobei dieser Dickschichtheizer einerends mit einem Schalter und anderenends mit wenigstens einem Zeitrelais zusammenwirkt, welches über eine Steuerleitung mit einem Temperaturfühler am Steigrohr in Verbindung steht.

Die bevorzugte Ausführungsform der Erfindung kennzeichnet sich durch ein selbstregelndes, PTC-Heizelement (Heizelement mit positivem Temperaturkoeffizienten) und einer Impuls-Pause-Steuerung.

Bevorzugt wird die Verwendung von zwei abwechselnd arbeitenden Zeitrelais, von denen das eine die Impulse und das andere die Pausen beim Betrieb des Dickschichtheizers steuert.

Das erfindungsgemäß ausgebildete elektrisch betriebene Haushaltgerät hat gegenüber dem Bekannten entscheidende Vorteile. Was die Wahl der Werkstoffe angeht, die für die Erstellung der Dickschichtleiterbahnen benutzt werden, so lassen sich als Pastenbestandteil für die elektrische Funktion der Dickschicht neben einem Bindemittel aus Glas oder Oxyden und einem Druckträger aus organischen Stoffen unterschiedliche Werkstoffe, wie Platin, Gold, Wismut, Ruthenate und Ruthinium-Oxyde einsetzen. Insbesondere können die Leiterbahnen in Form einer Silber-Palladium-Dickschicht aufgebracht werden. Als Werkstoff für den Tragkörper der Dickschichtleiterbahnen eignen sich Materialien wie Glas, Steatit, emaillierter Stahl. Vor allem läßt sich als Tragkörper eine Aluminium-Oxyd-Platte einsetzen.

Die erfindungsgemäße Dickschichtheizung weist nur eine geringe Wärmekapazität auf. Dies bedeutet, daß sie sehr schnell auf das Ein- und Ausschalten der elektrischen Energie reagiert. Es ist daher möglich, das erfindungsgemäße elektrisch betriebene Haushaltgerät als Schwallbrüher zu benutzen. Dies bedeutet, daß im Gegensatz zu den meisten bisher bekannten, auf dem Markt befindlichen Ausführungsformen die Zuführung des erhitzten Wassers zum Kaffeemehl nicht kontinuierlich sondern schwallweise erfolgt. Dabei ist es von besonderem Vorteil, daß durch die erwähnte geringe Eigenwärme der eingesetzten PTC-Heizelemente der Schwallbetrieb durch eine einfache Impuls-Steuerung erzielt werden kann. Dabei hat man es in der Hand, die Zeit für die Impulse bzw. die Zeit für die Pausen zu steuern. Dies erfolgt durch eine entsprechende Ansteuerung des jeweiligen Relais. Der Temperaturfühler ist ebenfalls auf eine gewünschte Temperatur einstellbar, so daß er erst nach Erreichen dieser Temperatur die mit ihm gekoppelten Relais ansteuert. Dabei ist es ferner möglich, nach einer bestimmten einstellbaren Anzahl von Schwallschüben die Heizung automatisch abzuschalten, wobei dann ferner die zusätzliche Möglichkeit besteht, die Warmhalteheizung eingeschaltet zu lassen.

Durch die erfindungsgemäße Ausbildung des elektrisch betriebenen Haushaltgerätes kann auf die Verwendung von Thermostaten, Dioden oder von einer Schmelzsicherung ganz verzichtet werden. Dadurch ergeben sich erhebliche Verbilligungen bei der Fertigung der Haushaltgeräte dieser erdem entfallen dadurch Stör- und Fehlerquellen.

Im Bezug auf die Ausbildung des Dickschichtheizers ergeben sich mehrere Möglichkeiten. Nach einem ersten Vorschlag der Erfindung besteht der Dickschichtheizer aus einem plattenförmigen Tragkörper aus einem elektrisch isolierenden Werkstoff, wie Keramik, Kunststoff od.dgl., der im Bereich des Bodens des Frischwasserbehälters angebracht ist und der auf seiner Außenseite wenigstens eine Dickschichtleiterbahn aufweist, die in pastenförmiger Form aufgebracht ist und deren Enden mit den Schalt- und Steuereinrichtungen verbunden sind. Zum Anbringen des plattenförmigen Tragkörpers am Boden des Frischwasserbehälters können in der Technik bekannte Verbindungen eingesetzt werden. Erwähnt sei beispielsweise das Verkleben. Da die Dickschichtheizung auf der Außenseite des Frischwasserbehälters angeordnet ist, entfallen Dichtungsprobleme, die bei denjenigen Ausführungsformen von solchen Haushaltgeräten auftreten, bei denen die elektrische Widerstandsheizung im Wasser selbst angebracht ist.

Eine besonders wirtschaftliche und daher preisgünstige Ausführungsform des Haushaltgerätes ergibt sich, wenn man nach einem weiteren Vorschlag der Erfindung die Dickschichtleiterbahnen unter Fortfall eines besonderen Trägers unmittelbar auf einer der Wandungen, vorzugsweise am Boden eines aus elektrisch isolierendem Werkstoff gefertigten Frischwasserbehälters anordnet. Bei dieser Ausführungsform werden somit die Dickschichtleiterbahnen unmittelbar auf einer der Wandungen des Frischwasserbehälters angebracht. Dabei werden wiederum pastenförmige Ausgangswerkstoffe zur Herstellung der Dickschichtleiterbahnen eingesetzt.

Es empfiehlt sich, den Dickschichtheizer eine Mehrzahl von Dickschichtleiterbahnen aufweise zu lassen, die einzeln oder gruppenweise benutzbar sind. Auf diese Weise kann man den Wünschen der Abnehmer des Haushaltgerätes entgegenkommen.

Nach einem weiteren Vorschlag der Erfindung weist der Kaffeeautomat an seinem Gehäuse eine Mehrzahl von wahlweise zu betätigenden Einstelleinrichtungen, wie Tasten, auf, durch die in Abhängigkeit von der zu erhitzenden Wassermenge eine Zuschaltung von Dickschichtleiterbahnen und damit eine Anpassung der aufzubringenden Energie erfolgt. Die Einstelleinrichtungen, wie die Tasten, können dabei leicht zugänglich an der Außenseite des Gehäuses des Kaffeeautomaten angebracht werden. Neben einer stufenlosen Einstellung ist auch eine stufenweise Regelung möglich. Beispielsweise lassen sich die Tasten so anbringen und schalten, daß eine Schaltstufe von immer 2 Tassen erfolgt. Dies bedeutet, daß bei der ersten Schaltstufe die Einrichtungen des Haushaltgerätes so aufeinander abgestimmt werden, daß sie die optimalen Werte für die Herstellung von nur zwei Tassen Kaffee haben. Durch Drücken einer anderen Taste kann dann eine entsprechende Anpassung an unterschiedliche Wassermengen und den dafür erforderlichen Energiebedarf vorgenommen werden.

Der Kaffeeautomat gemäß der vorliegenden Erfindung kann wahlweise auch als Heißwasserbereiter benutzt werden. Um dies zu ermöglichen, wird vorgeschlagen, den Auslaß des Steigrohres aus dem Bereich des Filterbehälters zu entfernen, wobei bei der bevorzugten Ausführungsform eine verschwenkbare Anordnung des Steigrohres am Gehäuse des Kaffeeautomaten erfolgt. Eine solche Möglichkeit bietet dem Besitzer des Kaffeeautomaten die Möglichkeit, z.B. ein oder zwei Tassen Suppe herstellen zu können. Die für die Herstellung der Suppe erforderlichen Zutaten werden in die Tassen gegeben und dann der Auslaß des Steigrohres über diese Tassen geschwenkt. Danach wird die zugehörige Taste, beispielsweise die Ein- oder Zweitassentaste gedrückt. Dadurch wird der Dickschichtheizer in Betrieb gesetzt und gibt die eingestellte Wassermenge erhitzt ab.

Hinsichtlich der Anordnung und der Ausbildung des Steigrohres ergeben sich unterschiedliche Möglichkeiten. Nach einem ersten Vorschlag der Erfindung ist das Steigrohr fest im Gehäuse angeordnet. Dies bedeutet, daß sein Einlaß einen genau festgelegten Abstand zum Boden des Frischwasserbehälters und damit zur Dickschichtheizung beibehält. Nach einem anderen Vorschlag der Erfindung wird demgegenüber die wirksame Länge des Steigrohres im Frischwasserbehälter verändert. Dies geschieht derart, daß der Einlaß des Steigrohres unterschiedliche Abstände zum Boden des Frischwasserbehälters einnimmt. Die Veränderung der wirksamen Länge des Steigrohres kann man beispielsweise durch einfaches Verschieben und anschließendes Fest klemmen erreichen. Auf diese Weise läßt sich der Abstand des Einlasses des Steigrohres im Bezug auf den Boden des Frischwasserbehälters regulieren. Die Menge des im Frischwasserbehälter verbleibenden Restwassers kann dadurch eingestellt werden.

Eine besonders einfache Regulierung kann dadurch erfolgen, daß man das Steigrohr als Teleskoprohr ausbildet. Durch Herausziehen oder Ineinanderschieben der Einzelteile des Teleskoprohres läßt sich dann die wirksame Länge des Steigrohres leicht einstellen.

Bei der bevorzugten Ausführungsform der Erfindung ist der Warmhalteplatte am Gehäusefuß ein zweiter Dickschichtheizer zugeordnet, der nach Abschalten der Hauptdickschichtheizers in seiner Betriebsstellung haltbar ist und zwar so lange, wie es der Benutzer wünscht. Selbstverständlich kann die aufzubringede Leistung dieses der Warmhalteplatte zugeordneten Dickschichtheizers geringer ausgelegt sein als die des Hauptdickschichtheizers.

In den Figuren der Zeichnungen ist die Erfindung in mehreren Ausführungsbeispielen dargestellt und zwar zeigen:

Fig. 1 ein erstes Ausführunsgbeispiel des erfindungsgemäß ausgebildeten, elektrisch betriebenen Kaffeeautomaten, teilweise im Schnitt, teilweise in Ansicht,

Fig. 2 in Seitenansicht den erfindungsgemäßen, elektrisch betriebenen Kaffeeautomaten nach der Fig. 1, jedoch ergänzt durch Schalt- und Steuereinrichtungen, diese sind strichpunktiert wiedergegeben,

Fig. 3 in Draufsicht gesehen eine erste Ausführungsform eines Dickschichtheizers, wie er bei einem Kaffeeautomaten nach den Fig. 1 und 2 eingesetzt wird,

Fig. 4 ebenfalls in Draufsicht eine zweite Ausführungsform eines Dickschichtheizers, bestimmt zum Einsatz bei einem Kaffeeautomaten nach den Fig. 1 und 2 und

Fig. 5 in schaubildlicher Darstellung und im vergrößerten Maßstab den Frischwasserbehälter des Kaffeeautomaten nach den Fig. 1 und 2 in strichpunktierten Linien mit dem zugehörigen Steigrohr und den mit diesem zusammenwirkenden Schalt- und Steuereinrichtungen sowie mit dem Dickschichtheizer.

Es sei zunächst erwähnt, daß in den Figuren der Zeichnungen nur diejenigen Teile eines elektrisch betriebenen Kaffeeautomaten dargestellt sind, welche für das Verständnis der Erfindung Bedeutung haben. So fehlen insbesondere die elektrischen Zuleitungen und ein Teil der Schalt- und Steuereinrichtungen. Diese können sowohl in grundsätzlich bekannter Weise ausgebildet sein als auch in ebenfalls bekannter Weise im Gehäuse oder am Gehäuse angebracht werden.

Dem Ausführungsbeispiel ist ein generell mit 1o bezeichneter Kaffeeautomat zugrundegelegt. Dieser weist ein Gehäuse 11 auf, das im wesentlichen L-förmig gestaltet ist, d.h. das Gehäuse 11 hat einen hohl gestalteten, aufrechten Gehäuseteil 12, der in seinem unteren Bereich in einen horizontal liegenden Gehäusefuß 13 übergeht, der dazu dient, auf einem Tisch oder allgemein auf einer Aufstellfläche abgestellt zu werden. In dem oberen Bereich des aufrechten Gehäuseteiles 12 ist ein Frischwasserbehälter 14 angeordnet, der im gewählten Ausführungsbeispiel aus zwei Teilen zusammengesetzt ist, nämlich aus einem Unterteil 15 und einem Oberteil 23. Im Ausführungsbeispiel ist der Unterteil 15 des Frischwasserbehälters 14 aus einem metallischen Werkstoff, vorzugsweise aus Aluminium hergestellt, der Oberteil 23 dagegen aus einem durchsichtigen Werkstoff. Ein durchsichtiger Werkstoff wird deswegen gewählt, um dem Benutzer die Möglichkeit zu geben, zu erkennen, wie viel Restwasser in dem Frischwasserbehälter noch enthalten ist. Zu diesem Zweck ist es auch zweckmäßig, auf einer der Wandungen des Oberteiles 23 eine Skala anzubringen, die der Einfachheit halber in der Zeichnung fehlt.

Im Bereich der Verbindungsstelle zwischen Unterteil 15 und Oberteil 23 des Frischwasserbehälters 14 hat der Unterteil eine ihm angeformte umlaufende, nutenartige Aufnahme 17, in welche der untere Rand der Oberteiles 23 hineinragt und dort unter Benutzung von Dichtungsmitteln festgehalten wird. Auf diese Weise entsteht ein allseitig geschlossener, druckdichter Frischwasserbehälter 14. Dieser hat im Bereich seiner Decke eine nicht näher bezeichnete Öffnung, die durch einen Dichtstopfen 22 verschließbar ist. Zum Einfüllen des Frischwassers in den Frischwasserbehälter 14 muß der Dichtstopfen 22 entfernt werden. Es sei erwähnt, daß aus Sicherheitsgründen der Dichtstopfen 22 eine feine durchgehende Bohrung aufweist, so daß hier die Möglichkeit gegeben ist, daß der unter Druck stehende Wasserdampf entweicht.

Im Inneren des Frischwasserbehälters 14 ist ein Steigrohr 19 angeordnet, das z.B. einstückig aus Aluminium gefertigt sein kann. Der Einlaß 2o des Steigrohres 19 liegt in unmittelbarer Nähe des Bodens des Unterteils 15 des Frischwasserbehälters 14. Der obere Teil des Steigrohres ist aus dem Frischwasserbehälter hinausgeführt und geht dann in ein Querrohr 25 über, das parallel und im Abstand zum Gehäusefuß 13 angeordnet ist. Das äußere freie Ende ist dann um 9o° zurückgebogen, so daß der Auslaß 21 des Querrohres 25 etwa in der Mitte über einem Filterbehälter 27 zu liegen kommt. Nach oben hin ist das Gehäuse 11 des Kaffeeautomaten mit einer Abdeckung 26 verschlossen, die abnehmbar gehalten ist.

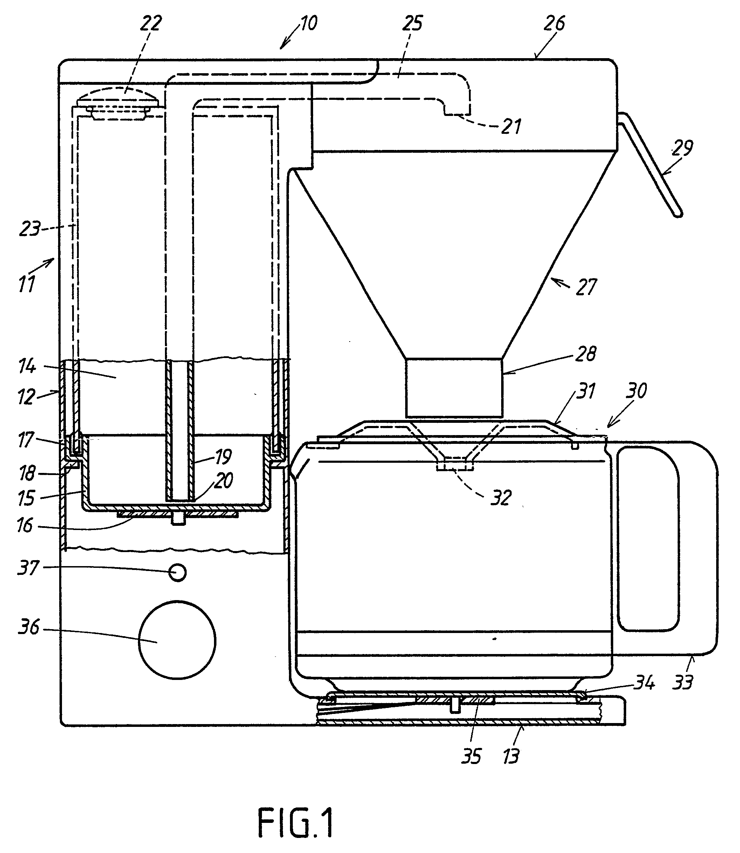

Der Filterbehälter 27 hat einen hohlzylindrischen Auslaßstutzen 28 und in seinem oberen Bereich einen Handgriff 29. In das Innere des Filterbehälters wird in bekannter Weise ein tütenförmiger Filter hineingelegt, der seinerseits das zu überbrühende Kaffeemehl aufnimmt. Unterhalb des nicht näher bezeichneten Auslasses des Austrittstutzens 28 befindet sich ein Auffangbehälter 3o, beispielsweise in Form eines Glaskruges, der an seiner Umfangsfläche eine Handhabe 33 aufweist. Die obere Öffnung des Auffangbehälters 3o ist durch einen Deckel 31 geschlossen, der in seiner Mitte liegend eine Einlaßöffnung 32 für den hergestellten Kaffee aufweist. Wie aus der Fig. 1 ersichtlich, wird der Auffangbehälter 3o auf eine Warmhalteplatte 34 aufgestellt, an deren Unterseite eine Dickschichtheizung 35 angebracht ist.

Mit 36 ist schematisch der Ein- und Ausschalter des elektrisch betriebenen Kaffeeautomaten 1o dargestellt und mit 37 darüberliegend ein Kontrolleuchte.

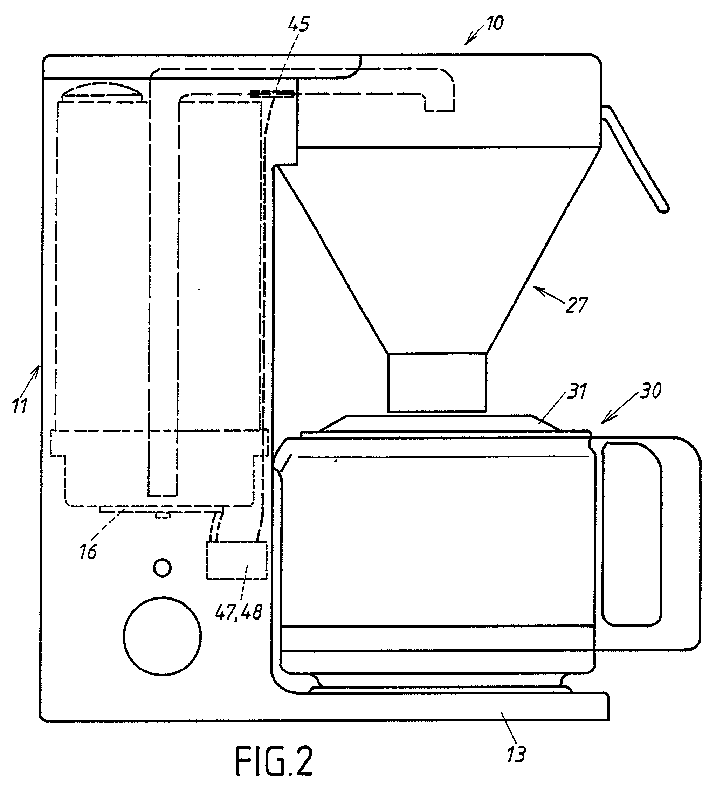

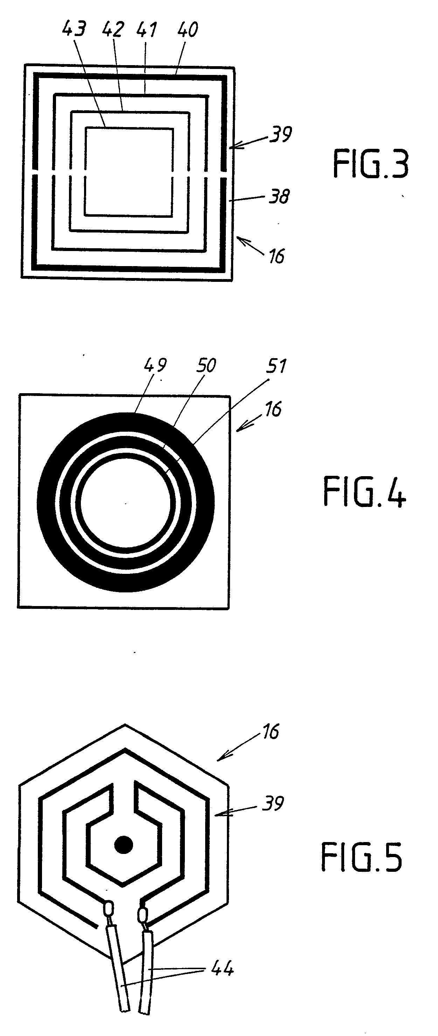

Die elektrisch betriebene Heizung des Frischwasserbehälters 14 des Kaffeeautomaten 1o ist als Dickschichtheizung ausgebildet. Wie aus den Fig. 1 und 2 der Zeichnung ersichtlich ist, ist in diesem Ausführungsbeispiel der Dickschichtheizer 16 an der Unterseite des Boden des Unterteiles 15 des Frischwasserbehälters 14 befestigt, beispielsweise angeklebt. Dieser Dickschichtheizer hat beispielsweise eine der in den Fig. 3 bis 5 angegebenen Ausführungsformen. Die drei zeichnerisch wiedergegebenen Ausführungsformen des Dickschichtheizers 16 haben gemeinsam einen plattenförmigen Tragkörper 38 aus einem elektrisch isolierenden Werkstoff, wie Keramik, Kunststoff od.dgl. und sie haben auf ihrer Außenseite liegend Dickschichtleiterbahnen, die in pastenförmiger Form aufgebracht sind. Unterschiedlich ist dabei einmal die äußere Gestaltung des platenförmigen Tragkörpers und die Anordnung und die Gestalt der auf diesem angeordneten Dickschichtleiterbahnen.

Bei der Ausführungsform nach der Fig. 3 der Zeichnung ist der Tragkörper 38 in Draufsicht gesehen etwa quadratisch gehalten. Die auf seiner Außenfläche angebrachten Dickschichtleiterbahnen sind generell mit 39 bezeichnet. Im speziellen Fall der Fig. 3 sind jedoch vier unterschiedliche Dickschichtleiterbahnen vorhanden, die jeweils U-förmig gestaltet sind und ineinandergeschachtelt werden, wobei die Ineinanderschachtelung sowohl in der oberen als auch in der unteren Hälfte erfolgt. Die außenliegende Dickschichtleiterbahn 4o hat die größte Gesamtlänge und die größte Breite aller vorhandenen Dickschichtleiterbahnen. Die weiter nach innenliegenden Dickschichtleiterbahnen 41, 42, 43 werden demgegenüber in ihrer Länge immer kürzer und ihre Breite nimmt ebenfalls ab, d.h. die innenliegende Dickschichtleiterbahn 43 hat die geringste Breite und die kleinste wirksame Länge.

Im dargestellten Ausführungsbeispiel der Fig. 3 der Zeichnung ist zwischen den oberen und den unteren Dickschichtleiterbahnen 4o bis 43 jeweils ein Spalt freigelassen. Es sei an dieser Stelle erwähnt, daß die Dickschichtleiterbahnen sowohl einzeln als auch gruppenweise geschaltet werden können. Auf eine besondere zeichnerische Darstellung dieser Möglichkeiten wird verzichtet, zumal diese Schaltungsmethoden grundsätzlich bekannt sind.

Bei der Ausführungsform nach der Fig. 4 der Zeichnung sind die Dickschichtleiterbahnen mit 49, 5o und 51 gekennzeichnet. Sie bestehen aus konzentrisch zum Mittelpunkt des Tragkörpers liegenden Kreisen mit unterschiedlicher Dicke, wobei auch in diesem Falle die breiteste Dickschichtleiterbahn außen und die dünnste innen liegt. Es sei an dieser Stelle erwähnt, daß die Breite der Dickschichtleiterbahn sich umgekehrt proportional zum elektrischen Widerstand verhält, d.h. die Dickschichtleiterbahn mit der größten Breite hat den kleinsten Widerstand des jeweiligen Dickschichtheizers.

Bei der Ausführungsform des Tragkörpers nach der Fig. 5 der Zeichnung hat dieser die Gestalt eines regelmäßigen Sechsecks und die Anzahl der Dickschichtleiterbahnen ist reduziert. Es ist daher nur eine Dickschichtleiterbahn 39 gekennzeichnet, wobei die Enden an die Anschlußleitungen 44 in bekannter Weise angeschlossen sind. Welche Dickschichtheizer eingesetzt werden, hängt von den Anforderungen ab, die an den Kaffeeautomaten 1o gestellt werden.

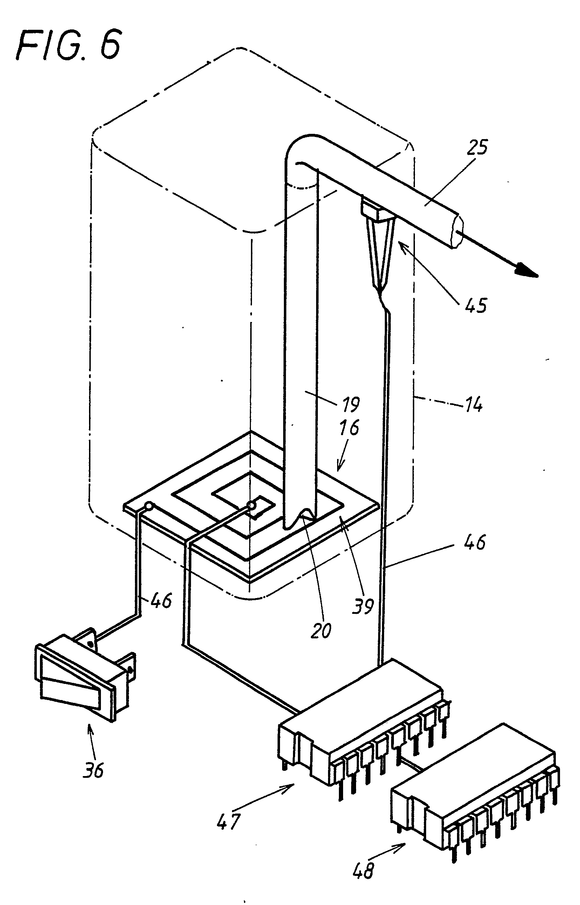

Anhand der Fig. 6 der Zeichnung wird ein Ausführungsbeispiel wiedergegeben. Dargestellt ist in strichpunktierten Linien und im vergrößerten Maßstab der Frischwasserbehälter 14, der aus Gründen der Vereinfachung als einstückiger Körper wiedergegeben ist. Im Bereich seines Bodens ist der I. Dickschichtheizer 16 angebracht. Die Dickschichtleiterbahn ist mit 39 gekennzeichnet. In unmittelbarer Nähe des Bodens des Frischwasserbehälters 14 befindet sich der Einlaß 3o des Steigrohres 19. Die Durchflußrichtung des Wassers ist in der Fig. 6 mit einem Pfeil gekennzeichnet, der am Ende des Querrohres 15 angebracht ist.

Im Ausführungsbeispiel ist zugrundegelegt, daß es sich bei dem I. Dickschichtheizer um einen PTC-Heizer mit 75o Watt Leistung handelt. Das eine Ende der Dickschichtleiterbahn ist über eine Steuerleitung 46 an einen handelsüblichen Ein- und Ausschalter 36 angeschlossen. Das andere Ende der Dickschichtleiterbahn 39 liegt ebenfalls über eine Steuerleitung an einem Relais 47, welches seinerseits mit einem weiteren Relais 48 verbunden ist. Am Querrohr 25 des Steigrohres 19 ist ein Temperaturfühler 45 befestigt, der über eine dritte Steuerleitung mit dem Relais 47 vebunden ist. Als Relais 47, 48 können beispielsweise eingesetzt werden solche, die von der Firma MOTOROLA unter der Typenbezeichnung CMOS auf den Markt gebracht werden. Bei dem Temperaturfühler 45 kann es sich um ein Produkt der Firma Siemens handeln, daskäuflich im Handel erworben werden kann. Im gewählten Ausführungsbeispiel regelt das Relais 47 die Impulse und das Relais 48 die Zeit. Die Einstellung ist dabei so vorgenommen, daß die Impulsdauer 5 Sekunden und die Pausendauer 7 Sekunden beträgt. Es ist vorgesehen, daß die beiden Relais etwa zwei Minuten lang im Wechsel geschaltet werden. Danach erfolgt das Ausschalten des I. Dickschichtheizers 16 und das Umschalten auf den zweiten Dickschichtheizer, der der Warmhaltung des Kaffees im Auffangbehälter 3o dient. Durch die geringe Eigenwärme des PTC-Heizelementes ist es möglich, durch eine einfache Impuls-Pause-Steuerung einen gezielten gleichbleibenden Schwall zu erzeugen, d.h. das durch das Steigrohr 19 fließende heiße Wasser gelangt nicht kontinuierlich zu dem Filterbehälter 27 sondern schwallweise. Natürlich hat man es in der Hand, durch entsprechende Einstellung der Schalt- und Steuereinrichtungen die Dauer des Schwalles und auch die Anzahl der für die Herstellung einer Charge erforderlichen Schwalle zu regeln. Die Schwalldauer kann - anders ausgedrückt - sowohl verlängert als auch verkürzt werden im Vergleich mit dem genannten Ausführungsbeispiel.

Bei der Ausbildung des Kaffeeautomaten 1o nach den Fig. 1 und 2 der Zeichnung ist vorausgesetzt, daß der Frischwasserbehälter 14 aus dem Unterteil 15 und dem Oberteil 23 zusammengesetzt ist, wobei der Unterteil ein metallischer Körper ist, während der Oberteil aus glasklarem Werkstoff gefertigt ist. Zu einer weiteren Vereinfachung und damit zu einer weiteren Senkung der Kosten bei der Herstellung des Kaffeeautomaten 1o kommt man dann, wenn man nach einem anderen Vorschlag der Erfindung für die Fertigung des Frischwasserbehälters 14 einen elektrisch isolierenden Werkstoff einsetzt und auf dessen einer Wandung, bevorzugt auf der Außenseite des Bodens, direkt die Dickschichtleiterbahnen unter Benutzung eines pastenförmigen Ausgangswerkstoffes aufbringt. Auf diese Weise kommt eine besondere, also zusätzliche Tragplatte in Fortfall und damit auch die Verbindungsmittel zwischen der Tragplatte und dem Frischwasserbehälter.

Bei der zeichnerisch wiedergegebenen Ausbildung der Erfindung ist ferner vorgesehen, daß das Steigrohr 19 ortsfest angeordnet ist. In Abweichung hiervon kann nach einem weiteren Vorschlag der Erfindung die wirksame Länge des Steigrohres 19 im Frischwasserbehälter verändert werden. Dabei wird beabsichtigt, den Abstand des Einlasses 2o des Steigrohres 19 vom Boden des Frischwasserbehälters unterschiedlich groß zu halten. Damit ändert sich auch die im Frischwasserbehälter verbleibende Restmenge. Die Veränderung der Lage des Steigrohres 19 im Frischwasserbehälter kann auf unterschiedliche Art und Weise erfolgen. Nach einem ersten Vorschlag der Erfindung erfolgt eine einfache Längsverschiebung des Steigrohres, wobei die jeweilige Lage durch Klemm- oder Rastelemente fixiert werden kann. Es ist aber auch denkbar, das Steigrohr 19 als Teleskoprohr zu gestalten. In diesem Falle ist es möglich, die einzelnen Teleskoprohrabschnitte ineinanderzuschieben oder auseinanderzuziehen, so daß man auf diese einfache Weise die wirksame Länge des Steigrohres verändern kann.

Bei den dargestellten Ausführungsformen des Kaffeeautomaten 1o ist nur ein normaler Ein- und Ausschalter 36 vorge sehen. In Abweichung von diesem Ausführungsbeispiel kann der Kaffeeautomat 1o an seinem Gehäuse 11 auch eine Mehrzahl von wahlweise zu betätigenden Einstelleinrichtungen, insbesondere Tasten, aufweisen. Durch diese Einstelleinrichtungen kann in Abhängigkeit von der zu erhitzenden Wassermenge eine Zuschaltung von Dickschichtleiterbahnen und damit eine Anpassung der aufzubringenden Energie erfolgen. Beispielsweise können am Gehäuse Testen angebracht sein, die mit den Tassenzahlen 2, 4, 6, 8 und 1o gekennzeichnet sind. Wenn dann der Benutzer beispielsweise auf die mit "2 Tassen" gekennzeichnete Taste drückt, dann wird von dem Kaffeeautomaten nur diejenige Energie zu Verfügung gestellt, die für das Erhitzen von zwei Tassen erforderlich ist. Neben einer stufenweisen Regulierung ist auch eine stufenlose möglich. Hier kann beispielsweise ein Schiebeschalter eingesetzt werden.

Bei den Ausführungsformen nach den Fig. 1 und 2 der Zeichnung ist das dargestellte Gerät nur als Kaffeeautomat verwendbar. Nach einem weiteren Vorschlag der Erfindung ist jedoch auch vorgesehen, diesen Kaffeeautomat als einfachen Wasserrerhitzer zu benutzen, wobei sich dann zusätzlich die Möglichkeit ergibt, die Menge des zu erhitzenden Wassers genau einzustellen und dabei zugleich eine Anpassung der erforderlichen elektrischen Energie zu erzielen. Zur Lösung dieser Aufgabe ist es lediglich erforderlich, das Steigrohr schwenkbar oder drehbar im Gehäuse 11 des Kaffeeautomaten 1o unterzubringen, wobei die Bewegung des Steigrohres so erfolgen muß, daß der Auslaß 21 aus dem Bereich des Filterträgers 27 herauskommt und seitlich neben dem Gehäuse 11 liegt. Man kann dann unter den jetzt neben dem Gehäuse befindlichen Auslaß 21 des Querrohres 25 des Steigrohres 19 einen Auffangbehälter, beispielsweise eine Tasse stellen, danach den Kaffeeautomaten 1o in Betrieb setzen, gegebenenfalls unter Wahl einer vorbestimmten Wassermenge, die erhitzt werden soll. Durch den Auslaß 21 strömt dann die gewünschte erhitzte Wassermenge hinaus. Auf diese Weise kann der Benutzer den Kaffeeautomaten in vorteilhafter Weise auch zum Erhitzen von Wasser benutzen, wobei er zugleich die Möglichkeit hat, die Menge des zu erhitzenden Wassers vorher festzulegen.

Wie bereits erwähnt, ist die dargestellte Ausführung nur eine beispielsweise Verwirklichung der Erfindung und diese nicht darauf beschränkt. Vielmehr sind noch mancherlei andere Ausführungen und Anwendungen möglich. Dies gilt besonders für die Gestaltung der Dickschichtheizers und hier insbesondere hinsichtlich der Gestalt des aus isolierendem Werkstoff bestehenden Trägers und der auf diesem aufgebrachten Dickschichtleiterbahnen. Dabei ist es sowohl möglich, die äußere Gestalt des Trägers 38 im Vergleich mit den Ausführungsformen nach den Fig. 3 bis 5 zu variieren als auch die Anbringung und Anordnung der Dickschichtleiterbahnen. Dabei kann sowohl die Anzahl der Dickschichtleiterbahnen pro Tragkörper verändert werden als auch deren geometrische Gestalt. Und schließlich ist es auch möglich, die Erfindung bei anderen als den dargestellten Kaffeeautomaten zu benutzen.

Bezugszeichenliste :

1o - Kaffeeautomat
11 - Gehäuse (von 1o)
12 - aufrechter Gehäuseteil (von 11)
14 - Gehäusefuß
14 - Frischwasserbehälter
15 - Unterteil (von 14)
16 - I. Dickschichtheizer
17 - nutartige Aufnahme (von 15)
18 - Auflage
19 - Steigrohr
2o - Einlaß (von 19)
21 - Auslaß (von 19)
22 - Dichtstopfen
23 - Oberteil (von 14)
25 - Querrohr (von 19)
26 - Abdeckung
27 - Filterbehälter
28 - Auslaßstutzen (von 27)
29 - Handgriff (von 27)
3o - Auffangbehälter
31 - Deckel (von 3o)
32 - Einlaßöffnung
33 - Handhabe
34 - Warmhalteplatte
35 - II. Dickschichtheizer
36 - Schalter (ein- und Ausschlater)
37 - Kontrollampe
38 - plattenförmiger Tragkörper
39 - Dickschichtleiterbahn
4o - unterschiedliche Dickschichtleiterbahnen (Fig. 3)
41 - unterschiedliche Dickschichtleiterbahnen (Fig. 3)
42 - unterschiedliche Dickschichtleiterbahnen (Fig. 3)
43 - unterschiedliche Dickschichtleiterbahnen (Fig. 3)
44 - Anschlußleiter
45 - Temperaturfühler

46 - Steuerleitung
47 - I. Zeitrelais (für Impulsteuerung)
48 - II. Zeitrelais (für Pausensteuerung)


**Ansprüche**

1. Elektrisch betriebenes Gerät zum Zubereiten von Heißgetränken, wie Kaffee od.dgl., in dessen Gehäuse ein druckdichter Frischwasserbehälter untergebracht ist, der im Bereich seines Bodens eine mit einem Schalter zusammenwirkende elektrische Heizung und in seinem Inneren ein Steigrohr aufweist, dessen Auslauf über einem das Kaffeemehl aufnehmenden Filterbehälter liegt und wobei unterhalb des Filterbehälters ein Auffangbehälters für den fertig zubereiteten Kaffee angeordnet ist, der auf einer Warmhalteplatte des Gehäusefußes abstellbar ist,
**dadurch gekennzeichnet,**
daß die elektrische Heizung des Frischwasserbehälters (14) aus Dickschichtleiterbahnen besteht, die unter Benutzung pastenförmiger Werkstoffe auf einen elektrisch isolierenden Träger aufgebracht sind und daß dieser Dickschichtheizer (16) einerends mit einem Schalter (36) und andernends mit wenigstens einem Zeitrelais (47 bzw. 48) zusammenwirkt, welches über eine Steuerleitung (46) mit einem Temperaturfühler (45) am Steigrohr (19) in Verbindung steht.

2. Gerät nach Anspruch 1, gekennzeichnet durch ein selbstregelndes PTC (positiver Temperatur-Koeffizient)-Heizelement und eine Impuls-Pause-Steuerung.

3. Gerät nach Anspruch 1 und 2, gekennzeichnet durch die Verwendung von zwei abwechselnd arbeitenden Zeitrelais (47, 48), von denen das eine die Impulse und das andere die Pausen beim Betrieb des Dickschichtheizers (16) steuert.

4. Gerät nach einem oder mehreren der vorangehenden Ansprüche, dadurch gekennzeichnet, daß der Temperaturfühler (45) an einem Querrohr (25) des Steigrohres (19) befestigt ist.

5. Gerät nach einem oder mehreren der vorangehenden Ansprüche, dadurch gekennzeichnet, daß der I. Dickschichtheizer (16) aus einem plattenförmigen Tragkörper (38) aus einem elektrisch isolierenden Werkstoff, wie Keramik, Kunststoff od.dgl. besteht, der im Bereich des Bodens des Frischwasserbehälters (14) angebracht ist und der auf seiner Außenseite wenigstens eine Dickschichtleiterbahn (39) aufweist, die in pastenförmiger Form aufgebracht ist und deren Enden mit den Schalt- und Steuereinrichtungen (36 bzw. 47 bzw. 48) verbunden sind.

6. Gerät nach Anspruch 1, dadurch gekennzeichnet, daß die Dickschichtleiterbahnen (39; 4o-43 bzw. 49-51) unter Fortfall eines besonderen Trägers unmittelbar auf einer der Wandungen - vorzugsweise am Boden - eines aus elektrisch isolierendem Werkstoff gefertigten Frischwasserbehälters (14) angeordnet sind.

7. Gerät nach einem oder mehreren der vorangehenden Ansprüche, dadurch gekennzeichnet, daß der Dickschichtheizer (16) eine Mehrzahl von Dickschichtleiterbahnen (4o-43 bzw. 49-51) aufweist, die einzeln oder gruppenweise benutzbar sind.

8. Gerät nach Anspruch 1, dadurch gekennzeichnet, daß der Kaffeeautomat (1o) an seinem Gehäuse (11) eine Mehrzahl von wahlweise zu betätigenden Einstelleinrichtungen, wie Tasten, aufweist, durch die in Abhängigkeit von der zu erhitzenden Wassermenge eine Zuschaltung von Dickschichtleiterbahnen und damit eine Anpassung der aufzubringenden Energie erfolgt.

9. Gerät nach Anspruch 1 und 8, dadurch gekennzeichnet, daß der Kaffeeautomat (1o) wahlweise als Heißwasserbereiter benutzbar ist und daß zur Erlangung dieser Benutzungsmöglichkeit der Auslaß (21) des Steigrohres (19) aus dem Bereich des Filterbehälters (27) entfernbar ist.

1o. Gerät nach Anspruch 9, gekennzeichnet durch eine verschwenkbare Anordnung des Steigrohres (19) am Gehäuse (11) des Kaffeeautomaten (1o).

11. Gerät nach Anspruch 1, dadurch gekennzeichnet, daß die wirksame Länge des Steigrohres (19) im Frischwasserbehälter (14) derart veränderbar ist, daß der Einlaß (2o) des Steigrohres (19) unterschiedliche Abstände zum Boden des Frischwasserbehälters (14) einnimmt.

12. Gerät nach einem oder mehreren der vorangehenden Ansprüche, dadurch gekennzeichnet, daß der Warmhalteplatte (34) am Gehäusefuß (13) ein II. Dickschichtheizer (35) zugeordnet ist, der nach Abschalten des I. Dickschichtheizers (16) in seiner Betriebsstellung haltbar ist.

FIG.1

FIG.2

43 42 41 40

39

FIG.3

38

16

49 50 51

16

FIG.4

16

FIG.5

39

44

# FIG. 6

Fa. Robert Krups Stiftung & Co.KG